# EUROPEAN PATENT SPECIFICATION

(11) **EP 3 064 863 B1**
(45) Date of publication and mention of the grant of the patent: **31.01.2018**
(21) Application number: 15382097.2
(22) Date of filing: 05.03.2015
(51) Int. Cl.: F24J 2/52

(54) **Mounting and canting system of reflective surfaces**
Montage- und neigungssystem von reflektierenden Oberflächen
Système de montage et d'inclinaison de surfaces réfléchissantes

(43) Date of publication of application: 07.09.2016
(73) Proprietor: Lozano Peña, Ricardo, 28043 Madrid (ES)
(72) Inventor: Lozano Peña, Ricardo, 28043 Madrid (ES)
(74) Representative: Temiño Ceniceros, Ignacio

(56) References cited:
- EP-A1- 2 327 941
- EP-A2- 2 339 262
- WO-A1-2005/040694
- KR-B1- 101 427 764
- US-A1- 2010 236 183
- US-A1- 2012 125 401

## Description

### FIELD OF THE INVENTION

The present invention is encompassed in technologies relating to surface assembly and control systems for assembling and controlling surfaces, especially reflective surfaces, made up of different units or facets, such as reflective elements used in solar concentration technologies or other technologies that require high precision for orientating surface elements that form a larger surface. More specifically, the invention relates to assembly and canting control systems for heliostats or parabolic troughs installed in solar power plants for power production.

### PRIOR ART

Since the beginning, techniques of using solar energy have mainly aimed at increasing the intensity of captured solar radiation for later use. Initially, said increase was intuitively brought about by trial and error methods. Nevertheless, this technical problem has later been approached scientifically, leading to systems with higher concentration of incident solar radiation on collection structures, thus allowing thermal conversions of greater efficiency, according to the principles of thermodynamics.

Central tower concentrating solar technologies consist of a solar field, usually made up of structures with several individual mirrors forming a large spherical or parabolic cap, in which focal point a fixed receiver is placed. By means of this distribution, incident solar radiation falling on the reflectors that follow solar movement, known as heliostats, is concentrated and focused on a receiver at the top of the tower. Therefore, the receiver absorbs the received radiation and transfers it, in the form of thermal energy, to a transport fluid called heat transfer fluid to be used directly in the corresponding thermal or thermodynamic process or to be stored as thermal energy that can be used later.

Generally, heliostats forming the solar field or collector subsystem have the capacity of tracking in two axes, known as azimuth or axis of rotation and zenith or axis of inclination with respect to the horizontal. Freedom of movement on both axes therefore ensures that the reflected radiation falls on the suitable area of the receiver, regardless of the position of the sun. On the other hand, the precise aiming of the reflected radiation depends on the relative position of the reflecting surface and the incident radiation, hence the importance of a precise orientation of the facets with each other, in order to a further concentrate the radiation on the receiver. In this context, a small angular error in the inclination of the reflective surfaces results in a corresponding deviation of the reflected beam, which depends on the distance to the receiver and on said angular error.

On the other hand, canting is the method whereby surface elements or facets of the solar concentrator are oriented, providing them with a suitable inclination, generally by means of respective angles with respect to the horizontal in perpendicular axes defining a reference plane coinciding with the surface to be leveled. When it comes to heliostats, the main technical purpose is to generate a focal point with the heliostat to further concentrate the reflected energy. Nowadays, for parabolic trough (PT) applications, the canting method, or spatial orientation of the facets, is performed by means of using duly machined molds or wedges on which the facets are deposited and then fixed to the structure that is supported on them. Additionally, this method usually includes a flipping operation, which involves complete rotation of the reflecting surface that varies typically between 2 m and 10 m square in commercial designs, with subsequent disruptions due to load variation, time loss and execution risks. Since the canting is performed with the inverted reflective surface, gravity loads must be considered in the previous calculations, and another reflecting surface position measurement or verification station is usually required.

For heliostat type solar trackers, the common method for the orientation of surface elements or facet is the complex iterative adjustment with the help of external measurement elements. These methods involve the use of equipment with a high cost and high risks of positioning errors or induction of deformation in the facets.

In order to reduce errors in concentration systems, the state of the art comprises various designs of heliostats with improved rigidity, as well as suitable systems for assembly and canting, as illustrated by the following references:
Patent application US 4502200 (Atlantic Richfield Co.) relates to a heliostat made up of several facets formed by mirrors attached to folded metallic sheets, which provide rigidity to the reflecting surface. These facets are attached to the heliostat structure by means of using threaded rods and sets of spherical nuts and washers. This type of connection allows the anchors to pivot slightly, reducing anchor stresses. However, the mentioned document does not indicate how the canting level is measured, nor does it indicate the attachment positions corresponding to the improvement of solar concentration.

Patent application EP 2410259 (Sener Ingeniería y Sistemas, S.A.) shows a discrete heliostat canting system by means of using grooved washers and a set of threaded rod and nuts. Said canting has to be done manually at each anchoring point of the facets. The main disadvantage of the discrete canting method is the existence of a high minimum canting error, characterized by the minimum thickness of the grooved washers. In fact, the patent application itself sets the adjustable minimum error at 1 mm; a value much higher than necessary in this kind of systems. In addition, vibrations of the structure, whether due to wind or other causes, can reduce the preload of the system, causing complete loosening thereof, the canting level being able change unpredictably or even causing parts, especially the grooved washers, to come off. Another disadvantage of this system is the large amount of time required for a correct canting because it is a trial and error method in which the position of all facets must be measured after each adjustment performing corrections iteratively to get closer to the tolerance.

Patent application WO 2011/083197 (Urssa Energy, S.L.) proposes a parabolic trough solar collector and a method of assembly thereof, but does not include or propose any positioning system and the subsequent attachment of the reflecting surfaces without changing their correct position, or for verification of the canting performed.

Patent application WO 2012/024411 (Sundrop Fuels, Inc.) shows a cable-driven heliostat moving on a ring. The reflecting surface is attached by means of preconfigured brackets and fixed shim.

Document KR101427764 B1 discloses a surface canting system according to the preamble of claim 1.

Finally, patent application WO 2014/075821 proposes a system for measuring the reflective surfaces of heliostats or parabolic troughs by means of using a gantry with measurement sensors which moves over the surface to be measured. The system included in said application has, as analyzed, several technical disadvantages among which the following must be mentioned:
- The canting depends on the manual skills of operators who must be able to attach the facets in the suitable position following the live measurements, for which purpose there is a need to have separate displays for each sensor. This system does not allow the adjustment of all facets of the heliostat at once, which is a waste of operation time.
- In case of misalignment of any measuring apparatus, the error will propagate without any means of immediate detection. The only option is the frequent position measurement by means of external precision instruments, which leads to system shutdown while verification is done.
- The canting process needs an additional amount of time spent on moving the measurement gantry from one row of facets to another because in each position only the facets forming the row can be adjusted.
- They are complex systems due to the large number of moving parts they possess. This complexity entails higher manufacturing and installation costs.
- Since the gantry, with the measuring elements, must be moved and positioned in different positions assured by external fixed stops, it is necessary to frequently check that the positioning is correct using external measurement equipment. Each position defines a plane which will be different for each row to be canted with respect to the canting reference plane or midplane, so this method induces an error typical to canting due to the design thereof.
- Only one row of facets can be simultaneously attached and adjusted due to the very nature of the mobile gantry systems, with the influences it has on the canting time for each heliostat. Furthermore, for each row that is adjusted simultaneously, the slowest station determines the cycle time spent on the operation, since the gantry does not move until the entire row is adjusted.
- Gantry systems with active measuring elements have the disadvantage of simultaneously contacting the reflecting surface generating vibration thereof and inducing deformation due to contact force of said elements, this load is additional to the actual gravity load of the heliostat with the subsequent error or inaccuracy in the process.

The present invention is presented as a technical solution that improves the known systems and rectifies their associated problems by means of a novel assembly and canting system for assembling and canting solar concentrating reflective surfaces.

### BRIEF DESCRIPTION OF THE INVENTION

An object of the present invention is to obtain technical means which allow reducing time and effort, improving angular accuracy, placement and canting of surface elements that form a given surface, such as a solar concentrating reflective surface. For this purpose, a surface canting system according to claim 1 is disclosed.

In another preferred embodiment of the invention, the control nodes are arranged in the intersection of a plurality of bars, of profiles attached by means of welding or of connecting elements threaded or connected by rivets. More preferably, the control nodes are arranged at regular distances in the three-dimensional canting structure to provide uniform canting reference points along the surface to be canted.

In another preferred embodiment of the invention, each control node comprises a support or plate or system where physical canting stops are installed. The support plates preferably comprise a plurality of housings for said physical canting stops. Likewise, the support plates can contain anchoring points for the control nodes, seats for structural bars, ribs and/or geometric reinforcements to stiffen said support plates.

In another preferred embodiment of the invention, the canting physical stops are attached to the support plates by means of sets of washers, nuts and locknuts located on both surfaces of the support plate or system. More preferably, attachment of physical canting stops to the support plate comprises a preloaded spring the position of which controls the height of canting. This height can be adjusted by means of a fine thread nut, for example, separated from the support plate by a washer or blocked by means of a setscrew, a chemical nut fastener or a locknut system. Alternatively, each physical canting stop can comprise a casing which is attached to a housing on the support plate by means of a setscrew preventing said casing from moving.

In an additional preferred embodiment of the invention, the physical canting stops have a contact control means for marking the canting positions of the reflective surface, said means comprising an inductive pressure or contact sensor or a load cell.

In another preferred embodiment of the invention, the physical canting stops comprise, in its upper region, a cap with one or more surfaces adapted for measurement by external optical verification means. More preferably, the physical canting stops comprise both in the upper cap and on the contact surface with the surface to be canted, receivers suitable for measurement by external optical verification means.

Another object of the present invention relates to a surface canting method according to claim 14.

### DESCRIPTION OF THE DRAWINGS

Figure 1 shows a general perspective view of the canting system of the invention according to a preferred embodiment thereof, applied to heliostat facets.
Figure 2 shows a detailed view of figure 1, in which part of the structure of the canting system has been cut off in order to allow viewing the position of the facets.
Figure 3 is a plan view of the canting system of the invention according to a preferred embodiment thereof, where the arrangement of the nodes and canting stops can be seen.
Figures 4, 5 and 6 detail different embodiments of the arrangement of nodes distributed in the structure of the invention including the support plates of physical canting stops.
Figures 7, 8 and 9 show different embodiments of the support plates of the invention made by stamping, machining and injection, respectively.
Figures 10 and 11 show two different methods of attaching physical canting stops to support plates as well as the geometric arrangement of the physical canting stops on said plates.
Figures 12 and 13 show the detail of two different embodiments of the canting stops of the invention.

**REFERENCE NUMBERS OF THE DRAWINGS**

| | |
|---|---|
| (1) | Three-dimensional canting structure |
| (2) | Heliostat support structure |
| (3) | Facet or surface element |
| (4) | Canting control node |
| (5) | Physical canting stops |
| (6) | Structural bars |
| (7) | Support plate |
| (8) | Housing for physical canting stop |
| (9) | Anchoring point |
| (10) | Seat for bars of the three-dimensional canting structure |
| (11) | Geometrical reinforcement of the support plate |
| (12) | Raw support plate |
| (13) | Support plate after manufacturing process |
| (14) | Washer |
| (15) | Nut |
| (16) | Strengthening bushing for housing the physical canting stop |
| (17) | Spring |
| (18) | Nut |
| (19) | Washer |
| (20) | Lower cap |
| (21) | Casing |
| (22) | Setscrew |
| (23) | Upper cap |
| (24) | Measurement surface |
| (25) | Upper area of the physical stop |
| (26) | Physical canting stop |
| (27) | Laser radar optical receiver |
| (28) | Washer |
| (29) | Nut |
| (30) | Spring inside the physical canting stop |
| (31) | Contact or position sensor |
| (33) | Physical canting stop casing |

### DETAILED DESCRIPTION OF THE INVENTION

As described in the preceding paragraphs, the present invention is proposed with the aim of promoting the correct assembly and canting of surface elements that make up a larger area, such as facets of a heliostat or other solar systems such as a parabolic trough, such as a photovoltaic concentration (PVC) module or, in general, for the proper arrangement of a plurality of surface elements with respect to a predefined joint surface, that allows saving time and effort in placing surface elements that make up a larger surface, with the corresponding reduction in human and economic costs and positioning error, improving the performances of said surface.

Therefore, the invention is based on the use of a single system for canting all surface elements forming the surface to be canted, such as the surface formed by the facets of a heliostat, in which the canting operation can be developed simultaneously in all surface elements, if desired, in which the canting can be verified in real time, and in which the operators or robots need only to slightly move the surface elements vertically until they contact a plurality of physical stops, proceeding then with the attachment thereof.

These physical stops are preferably adjustable in height, in order to allow adjusting the system for different relative positions of the surface elements. The physical stops are preferably located in the vertical of the points of the surface elements to be controlled. For example, for a plurality of facets forming the reflective surface of a heliostat, the physical stops can be located in the vertices of the facets, the latter being an optimum arrangement which entails a smaller positioning error if their attachment points are in those positions. Otherwise, the physical stops will preferably be located as close as possible to the area where the facet anchoring points are located, in order to avoid inducing deformations and to reduce canting error.

The structure and supports thereof will be designed to allow expansion along both axes to occur without restriction and in a centered and symmetrical manner, thus preventing bending loads that may change the relative position of the physical canting stops.

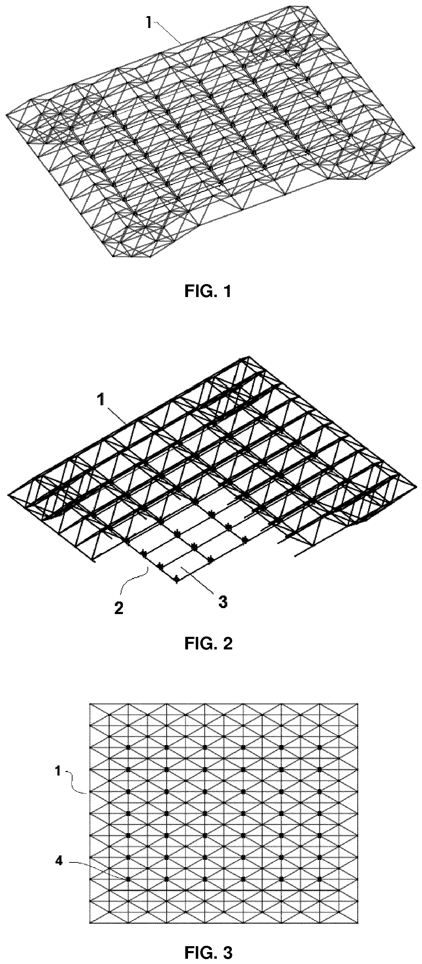

The canting system and canting objects of this invention are describe in detail below according to the embodiments shown in Figures 1-13 of this document:
As shown in Figure 1, the canting system of the invention is preferably based on a three-dimensional canting structure (1) the horizontal surface of which is larger than that of the surface to be canted. Said three-dimensional canting structure (1) is configured to be located in a space larger than that of the canting surface (for example, it can be located above a heliostat positioned in a horizontal orientation). This three-dimensional canting structure (1) is stiff enough so that the shape thereof does not change during use or degrades over time. Typical elements having a modular structure, such as bars, beams, supports and fittings thereof, can be used for manufacturing same. In a preferred embodiment of the invention, this structure is static and has a plurality of supports that allow movement, insertion and removal of the surface to be canted. These supports allow unrestricted, centered and symmetrical expansion of the three-dimensional canting structure (1) along the main axes, avoiding deformation of the structure and change in the relative position of the physical canting stops (5) when the environmental temperature changes.

Figure 2 shows a heliostat support structure (2) located in the space smaller than the three-dimensional canting structure (1), preferred embodiment of the invention. As shown in the drawing, said upper structure (1) covers a larger area than the heliostat support structure (2). The latter in turn has a vertical displacement system that allows inserting the support structure (2) together with the facets (3) supported thereon under the three-dimensional canting structure (1) without risk. This vertical displacement system can be any one of those existing on the market today, since the heliostat support structure (2) preferably has rest supports at appropriate points of its perimeter or, preferably, at its central point, depending on the heliostat design, thus eliminating the need for precision in the vertical displacement system.

As shown in Figure 3, in a top view of the three-dimensional canting structure (1), it also comprises a plurality of canting control nodes (4), preferably regularly arranged along the horizontal surface of the structure (1). More preferably, the arrangement of control nodes (4) coincides with the positions of the anchoring systems of the facets or surface elements (3) to be canted.

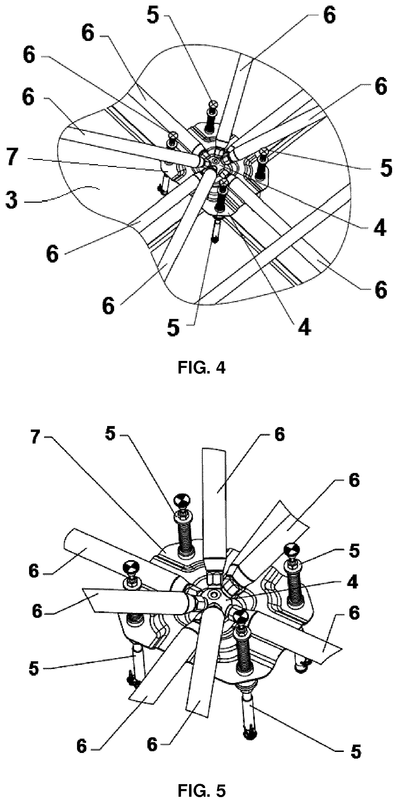

Advantageously (Figures 4-6), the control nodes (4) of the system of the invention comprise one or more physical canting stops (5), formed as substantially static elements, the function of which is to block vertical displacement, i.e., being a physical stop, when making contact with the facets (3), thus marking the canting positions thereof, with the preferred possibility of containing auxiliary elements, which can be pivoting or vertically movable, with the function of detecting contact of the facet against the stop.

Therefore, controlling the relative position of the physical stops (5) allows deriving the canting positions of the facets (3) for subsequent implementation by operators or systems adapted for this purpose.

For installation in the three-dimensional canting structure (1) of the invention, it is possible to arrange the control nodes (4) preferably at the intersection of a plurality of structural bars (6), preferably by screw means, in order to simplify the assembly of the three-dimensional canting structure (1). However, the system of structural bars (6) is not the only method for building said structure (1), also being able to be manufactured, for example, with different profiles connected by means of welding, connecting elements such as screws or rivets, or any other method existing in the state of the art to enable constructing a three-dimensional canting structure (1) as described. The control nodes (4) can also be arranged in another location of the three-dimensional canting structure (1); although for economic reasons its preferred location is at the intersections of the structure (1), as discussed above.

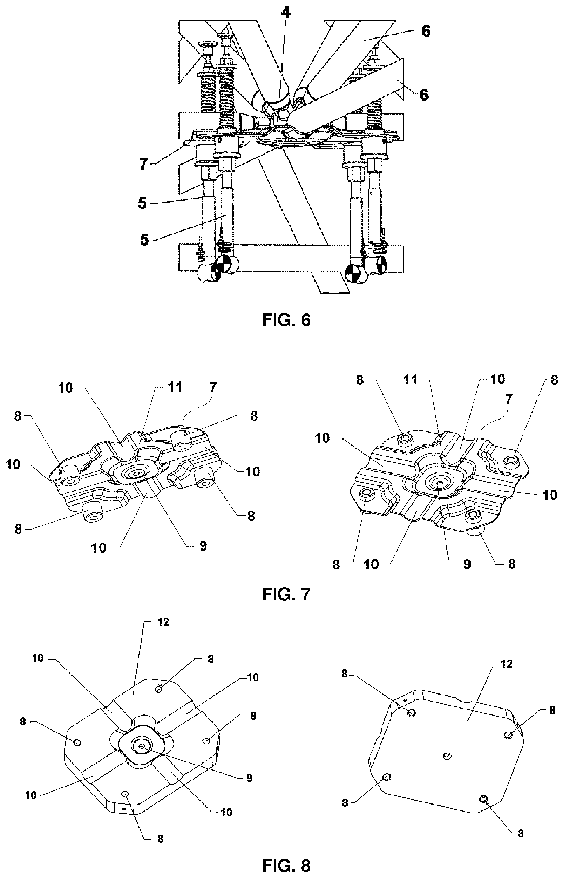

Each control node (4) is in turn preferably provided with a support plate (7) where the physical stops (5) are installed, although use of double nuts or other suitable systems for attaching said physical canting stops (5) is also possible. These support plates (7) can be manufactured in various ways, as desired, such as stamping, machining or injection, for example, as can be seen in Figures 7, 8 and 9, respectively. The proposal of these manufacturing methods does not exclude other possibilities, such as forging or casting.

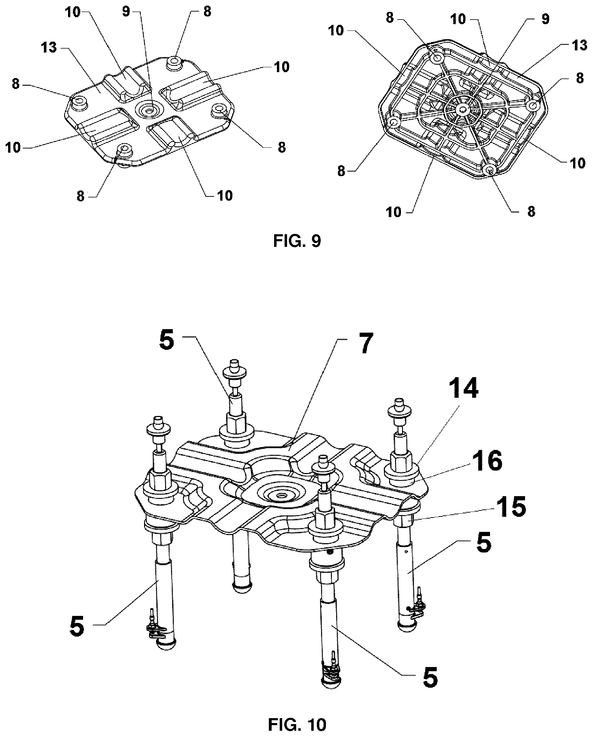

Figures 7, 8 and 9 show the different main elements that are defined in the support plates (7) in terms of the different manufacturing methods. Said elements can be used, individually or in combination, in different preferred embodiments of the invention, and preferably comprise housings (8) for the physical canting stops (5), anchoring points (9) for the control nodes (4), seats (10) for structural bars (6), ribs or geometric reinforcements (11) to stiffen the support plate (7). Regarding the shape of the support plate (7) itself, it is shown in Figures 8 and 9 both as a machined support plate (12) and as injection molded plate (13).

The presence of seats (10) for the threaded rods (6) prevents rotation or displacement of the support plate (7), thus increasing the stability of the canting system over time.

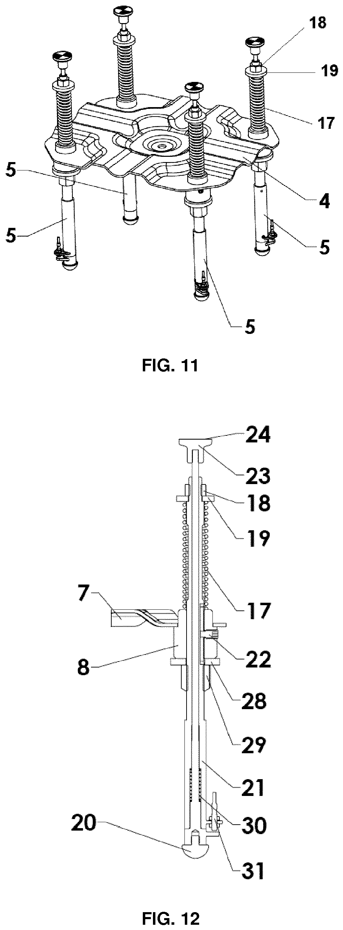

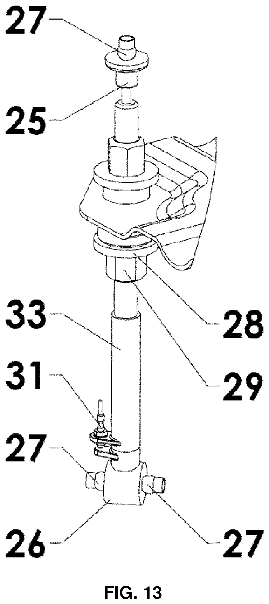

Figures 10 and 11 of this document show the vertical geometric arrangement of the physical canting stops (5), while Figures 12 and 13 show in more detail different possible configurations thereof. More specifically, Figures 10 and 13 show a set of physical canting stops (5) the attachment system of which for attachment to the support plate (7) is based on the use of sets of washers (14) and nuts (15) on both surfaces of the bushing (16) of the support plate (7) serving as a housing (8) for the physical canting stops (5). In this embodiment, changing the canting groups or relative distances between reference points of the same facet (3) is performed by means of adjusting and tightening both sets of connections from both sides of the bushing (16) of the support plate (7).

Figures 11 and 12 in turn show a system using a physical canting stop (5) the attachment system of which for attachment to the support plate (7) is based on the use of a duly preloaded spring (17) between a washer (19) and a nut (18) and the housing (8) of the physical canting stop (5) in the support plate (7). The height of canting can be adjusted by means of a nut (29), preferably with fine thread, separated from the housing (8) of the support plate by a washer (28) or blocked by means of a setscrew, a chemical nut fastener or a locknut system, for example, as desired. If necessary, the spring (17) can be compressed or decompressed by means of using the nut (18) and washer (19), configured for this purpose. In any case, the spring (17) must lift the physical canting stop (5), a movement that is blocked and controlled by the adjusting nut (29).

As described above, the mode of operation and usefulness of physical canting stops (5), irrespective of its attachment system, is to provide a physical stop system against which the surface to be canted moves (for example, the facets (3) of a heliostat). In a preferred embodiment of the invention (Figure 12), said physical canting stops (5) have contact control means (31) integrated with or incorporated to the physical stop, such as an inductive pressure or contact sensor; a load cell or any other related system that serves to alert the operator that he has reached the desired physical canting stop. Each physical canting stop (5) preferably comprises a casing (21) fixed to its housing (8) in the support plate (7) by means of a setscrew (22) which ensures, together with the adjusting nut (29), that said casing (21) is not displaced. The physical stop will therefore act when the lower cap (20) is pushed and vertically displaced by the surface element or facet (3) until it contacts the casing (21), at this moment, its rigidity will prevent the facet (3) from displacing further, ensuring its correct position, and the detector (31) will signal that contact is occurring. In a preferred embodiment of the invention, the physical canting stops (5) contain therein a spring (30), or functionally similar system, to ensure that when the facet (3) does not push the cap (20) of the physical stop (5) against the casing (21), the cap (20) is separated from said casing (21) and correct positioning signal will be interrupted.

Additionally, the canting system of the invention presents the possibility of accurately verifying the position of the physical canting stops (5) by external optical means, which are not affected by the unlikely deformations of the three-dimensional canting structure (1), and which allow verification before, during and after canting process, as desired. Verification systems that are preferred are photogrammetry, laser radar, laser tracker, measurement laser systems, or any other suitable optical measuring means from those commonly used in the state of the art.

For the use of these optical systems, the three-dimensional canting structure (1) preferably has numerous gaps and openings, sufficient to ensure the physical canting stops (5) are visible from the upper and lower parts of the structure and directly from many points of the perimeter. Therefore, depending on the desired verification system, the position of the physical canting stops (5) can be verified from a single external point or from several points, as appropriate. To make this possible, the physical canting stops (5) are easily adaptable in their configuration.

As an example of the mentioned embodiment, Figure 12 shows a physical canting stop (5) fixed by a spring system (17) and adjusting nut (29). The rigid body has an inner rod connecting the cap (20) of the physical canting stop (5), going through the casing (21) of said stop (5) to its upper part, with the upper part of the system, which has a cap (23) with, for example, a surface (24) adapted for photogrammetric measurement. The actual position of the controlled canting points could therefore be determined by photogrammetry technique, from the upper part of the system, by means of measuring a plane parallel vertically translated the corresponding length of the inner rod of the physical canting stop (5) and defined by a plurality of reference photogrammetric surfaces (24). These surfaces may also be located on the lower cap (20) for verification from the lower part of the system, with the peculiarity that it would not be a suitable system for verifying the position of the canting points while canting facets (3), whereas the other embodiments do not present this disadvantage. If control by means of a laser tracker or laser pointer is desired, for example, a device such as that shown in Figure 13 can be mounted. In this device, both the upper part (25) of the rod and the contact surface (26) for contact with the surface to be canted have receivers (27) suitable for use with said laser tracker.

The canting method by means of using the system object of the invention is described below according to a preferred embodiment of said method for canting a heliostat.

Once assembled the heliostat structure (2), which supports the facets (3), is positioned horizontally. Subsequently, all facets (3) to be supported thereon are deposited on the structure, the structure (2) bends as correspond as it is subjected to the load induced by the weight of said facets (3).

Next, the heliostat structure with the facets (3) supported thereon, is inserted below the canting system of the invention, under the three-dimensional canting structure (1). In this step, the support structure (2) of the facets (3), belonging to the heliostat, will be in its lowest position.

Once the heliostat structure (2) in held in the correct position under the three-dimensional canting structure (1) of the canting system object of the invention, said structure (2) is placed in a canting position, preferably supported on a central support or, alternatively, a plurality of perimetric supports. This measurement position requires lifting said support structure (2) to a predetermined distance with respect to the three-dimensional canting structure (1), in which no facet makes contact with the physical stop (5) but are at a suitable distance for proper canting.

At this time, operators or automatic systems can access the area smaller than the facets (3), below both structures; the three-dimensional canting structure (1) and the heliostat structure (2).

Then, each facet (3) is raised, pushing until contacting with the physical canting stops (5), or until the auxiliary sensor (31) (if one is used, for example, inductive means) actives a light signal or a warning sound to finally fix the canting in said position using the anchoring elements for facet (3). In a preferred embodiment of the invention, the sensors (31) existing in the physical canting stops (5) report the presence of contact between the physical canting stop (5) and the surface element or facet (3), ensuring that if all signals are activated at the end the attachment of the facet (3), all them will be located in the desired canting position. All facets (3) can be simultaneously canted and/or verified with the system object of the invention.

Once the full heliostat is canted and the positions are verified, with the aid of auxiliary sensors, if any, the heliostat support structure (2) with the already canted facets (3) is lowered so that there is a sufficient distance with respect to the three-dimensional canting structure (1) to avoid collisions. Then the heliostat is removed, and the system is now available to be used again.

Prior to the introduction of the heliostat structure with the facets (3), after removing the latter, i.e., either between canting methods or during the performance thereof, the correct position of the physical canting stops (5) will be verified using suitable means according to the chosen system configuration. It is worth noting that, once the physical canting stops (5) are adjusted for the desired canting, the stops (5) keep their relative position constant, since neither the stops nor the support structure thereof move, so the canting obtained during canting operation will be very repeatable.

Some verification means, without excluding others, include photogrammetry, laser radar, laser tracker or measurement lasers used from the perimeter of the three-dimensional canting structure (1) or from the lower or upper part, as a means for verifying the position of the laser receivers (27) or the measurement surfaces (26). As already mentioned, the physical canting stops (5) may be provided with an electronic proximity switch, or, in a preferred design of the invention, an inductive measurement system. These auxiliary sensors can be integrally attached to the physical stop (5) or be an integral part of its design.

## Claims

1. A surface canting system for performing canting operations on the surfaces of the type forming part of a solar concentrator, comprising:
- a three-dimensional canting structure (1) configured to cover the entire surface to be canted;
- a plurality of canting control nodes (4) arranged in the three-dimensional canting structure (1);
said system being **characterized in that** the canting control nodes (4) comprise one or more physical canting stops (5) for fixing canting reference points on the entire surface to be canted when said surface is located in the space covered by the three-dimensional canting structure (1), wherein the physical canting stops (5) have pivoting or vertically movable parts or elements, so that the positions of said physical canting stops (5) are adjustable.

2. The system according to the preceding claim, wherein the canting control nodes (4) are arranged at the intersection of a plurality of structural bars (6), of profiles connected by means of welding or of connecting elements threaded or connected by rivets.

3. The system according to any of the preceding claims, wherein the canting control nodes (4) are arranged at regular distances in the three-dimensional canting structure (1).

4. The system according to any of the preceding claims, wherein the three-dimensional canting structure (1) is made up of a plurality of substructures to cover the entire surface to be canted.

5. The system according to any of the preceding claims, wherein the canting control nodes (4) comprise a support plate (7) where the physical canting stops (5) are installed.

6. The system according to any of the preceding claim, wherein the support plates (7) comprise anchoring points (9) for the canting control nodes (4).

7. The system according to any of claims 5-6, wherein the support plates (7) comprise seats (10) for structural elements of the three-dimensional canting structure (1), such as structural bars (6), ribs and/or geometric reinforcements (11) to stiffen said support plates (7).

8. The system according to any of claims 5-7, where the physical canting stops (5) are fixed to the support plate (7) by means of sets of washers (14) and/or nuts (15) located on both surfaces of a bushing (16) serving as a housing (8) in the support plate (7).

9. The system according to any of claims 5-8, wherein the physical canting stops (5) attachment to the support plate (7) comprises a preloaded spring (17), the canting height being adjustable by means of a nut (29), preferably with fine thread, separated from the support plate (7) by a washer (28) and/or blocked by means of a setscrew, a chemical nut fastener or a locknut system.

10. The system according to any of the preceding claims, wherein the physical canting stops (5) have auxiliary contact control means (31) for signaling the proper contact between the facets (3) and physical canting stops (5), said auxiliary means comprising an inductive contact or pressure sensor or a load cell.

11. The system according to any of the preceding claims, wherein the physical canting stops (5) comprise, in its upper region, an upper cap (23) and/or, in its lower region, a lower cap (20) with one or more surfaces (24) adapted for measurement by external optical verification means.

12. The system according to any of the preceding claims, wherein the physical canting stops (5) comprise, in the upper cap (25) or on the contact surface (26) with the surface to be canted, receivers (27) suitable for measurement by optical verification means.

13. The system according to any of the preceding claims, wherein the surface to be canted comprises one or more heliostat facets (3), and wherein the arrangement of canting control nodes (4) coincides with the positions of the anchoring systems for such facets (3) to be canted.

14. A surface canting method for canting a surface formed by a plurality of surface elements, which comprises using the system according to any of the preceding claims, and wherein the following steps are performed:
- configuring the position of the physical canting stop (5) according to the shape of the final surface to be obtained;
- verifying the correct positioning of physical canting stops (5) by means of optical measurement systems using direct measurement;
- positioning the reflective surface to be canted under the three-dimensional canting structure (1) without contact with the physical canting stops (5) and at a selected distance from said three-dimensional canting structure (1);
- moving the surface elements until contacting with all the physical canting stops (5) that correspond to them, attaching them in said position, obtaining the desired final orientation of the surface;
- verifying the orientation of each surface element to be canted by means of manual or automatic verification, determining if it contacts the physical canting stops (5), either by means of using optical measurement systems or by direct measurement or observation;
- removing the canted surface from the system.

## Patentansprüche

1. Oberflächenneigungssystem zur Durchführung von Neigungsvorgängen an den Oberflächen, welches Teil eines Sonnenkonzentrators ist, umfassend:
- eine dreidimensionale Neigungsstruktur (1), welche dazu ausgebildet ist, die gesamte zu neigende Oberfläche zu decken;
- eine Vielzahl von Neigungssteuerknoten (4), welche in der dreidimensionalen Neigungsstruktur (1) angeordnet sind;
wobei das genannte System **dadurch gekennzeichnet ist, dass** die Neigungssteuerknoten (4) einen oder mehrere physikalische Neigungsanschläge (5) umfassen, zum Fixieren der Neigungsbezugspunkte auf der gesamten zu neigenden Oberfläche, wenn sich die genannte Oberfläche im von der dreidimensionalen Neigungsstruktur (1) gedeckten Raum befindet, wobei die physikalischen Neigungsanschläge (5) verschwenkbare oder vertikal bewegliche Teile oder Elemente aufweisen, so dass die Positionen der genannten physikalischen Neigungsanschläge (5) einstellbar sind.

2. System nach dem vorhergehenden Anspruch, wobei die Neigungssteuerknoten (4) an einem Kreuzungspunkt einer Vielzahl von Strukturstangen (6) angeordnet sind, mit Profilen, welche mittels Verschweißung oder gewindeter oder durch Nieten verbundener Verbindungsteile verbunden sind.

3. System nach einem der vorhergehenden Ansprüche, wobei die Neigungssteuerknoten (4) in regelmäßigen Abständen in der dreidimensionalen Neigungsstruktur (1) angeordnet sind.

4. System nach einem der vorhergehenden Ansprüche, wobei sich die dreidimensionale Neigungsstruktur (1) aus einer Vielzahl von Unterstrukturen zusammensetzt, um die gesamte zu neigende Oberfläche zu decken.

5. System nach einem der vorhergehenden Ansprüche, wobei die Neigungssteuerknoten (4) eine Stützplatte (7) umfassen, in welcher die physikalischen Neigungsanschläge (5) installiert sind.

6. System nach einem der vorhergehenden Ansprüche, wobei die Stützplatten (7) Verankerungspunkte (9) für die Neigungssteuerknoten (4) umfassen.

7. System nach einem der Ansprüche 5-6, wobei die Stützplatten (7) Sitzflächen (10) für Strukturelemente der dreidimensionalen Neigungsstruktur (1) umfassen, wie Strukturstangen (6), Rippen und/oder geometrische Verstärkungen (11), um die genannten Stützplatten (7) zu versteifen.

8. System nach einem der Ansprüche 5-7, wobei die physikalischen Neigungsanschläge (5) an der Stützplatte (7) mittels Sätze von Dichtungsringen (14) und/oder Muttern (15) fixiert sind, welche sich auf beiden Oberflächen einer Buchse (16) befinden, welche als Aufnahme (8) in der Stützplatte (7) dient.

9. System nach einem der Ansprüche 5-8, wobei die Kopplung durch die physikalischen Neigungsanschläge (5) mit der Stützplatte (7) eine vorgespannte Feder (17) umfasst, wobei die Neigungshöhe mittels einer Mutter (29) einstellbar ist, vorzugsweise mit Feingewinde, welche von der Stützplatte (7) durch einen Dichtungsring (28) getrennt ist und/oder mittels einer Einstellschraube, eines chemischen Mutterbefestigungselement oder eines Sicherungsmuttersystems blockiert ist.

10. System nach einem der vorhergehenden Ansprüche, wobei die physikalischen Neigungsanschläge (5) unterstützende Kontaktsteuermittel (31) aufweisen, für das Signalisieren des richtigen Kontakts zwischen den Facetten (3) und den physikalischen Neigungsanschlägen (5), wobei die genannten unterstützenden Mittel einen induktiven Kontakt- oder Drucksensor oder eine Wägezelle umfassen.

11. System nach einem der vorhergehenden Ansprüche, wobei die physikalischen Neigungsanschläge (5), in deren oberen Bereich, eine obere Kappe (23) und/oder, in deren unteren Bereich, eine untere Kappe (20) umfassen, mit einer oder mehreren Oberflächen (24), welche für die Messung durch äußere optische Prüfmittel angepasst sind.

12. System nach einem der vorhergehenden Ansprüche, wobei die physikalischen Neigungsanschläge (5), in der oberen Kappe (25) oder auf der Kontaktoberfläche (26) mit der zu neigenden Oberfläche, Empfänger (27) umfassen, welche für die Messung durch optische Prüfmittel geeignet sind.

13. System nach einem der vorhergehenden Ansprüche, wobei die zu neigende Oberfläche eine oder mehrere Heliostatfacetten (3) umfasst, und wobei die Anordnung von Neigungssteuerknoten (4) mit den Positionen der Verankerungssysteme für solche zu neigende Facetten (3) übereinstimmt.

14. Oberflächenneigungsverfahren für die Neigung einer aus einer Vielzahl von Oberflächenelementen gebildeten Oberfläche, welches die Verwendung des Systems nach einem der vorhergehenden Ansprüche umfasst, und wobei die folgenden Schritte durchgeführt werden:
- das Gestalten der Position des physikalischen Neigungsanschlages (5) gemäß der Form der endgültigen zu erhaltenden Oberfläche;
- das Prüfen der richtigen Positionierung der physikalischen Neigungsanschläge (5) mittels optischer Messsysteme unter Verwendung von direkter Messung;
- das Positionieren der reflektierenden zu neigenden Oberfläche unter der dreidimensionalen Neigungsstruktur (1) ohne Kontakt mit den physikalischen Neigungsanschlägen (5) und in einem ausgewählten Abstand von der genannten dreidimensionalen Neigungsstruktur (1);
- das Bewegen der Oberflächenelemente, bis sie in Kontakt mit allen physikalischen Neigungsanschläge (5) stehen, die denen entsprechen, so dass sie in der genannten Position gekoppelt werden und die gewünschte endgültige Ausrichtung der Oberfläche erhalten wird;
- das Prüfen der Ausrichtung jedes zu neigenden Oberflächenelementes mittels manueller oder automatischer Prüfung, so dass bestimmt wird, ob es in Kontakt mit den physikalischen Neigungsanschlägen (5) kommt, entweder mittels Verwendung optischer Messsysteme oder durch direkte Messung oder Beobachtung;
- das Entfernen der geneigten Oberfläche aus dem System.

## Revendications

1. Système d'inclinaison de surfaces pour réaliser des opérations d'inclinaison sur les surfaces du type faisant partie d'un concentrateur solaire, comprenant:
- une structure d'inclinaison tridimensionnelle (1) configurée pour recouvrir toute la surface à incliner ;
- une pluralité de noeuds de commande d'inclinaison (4) disposés dans la structure d'inclinaison tridimensionnelle (1) ;
ledit système étant **caractérisé en ce que** les noeuds de commande d'inclinaison (4) comprennent une ou plusieurs butées d'inclinaison physiques (5) pour fixer des points de référence d'inclinaison sur toute la surface à incliner lorsque ladite surface est située dans l'espace couvert par la structure d'inclinaison tridimensionnelle (1), dans lequel les butées d'inclinaison physiques (5) ont des parties ou des éléments pivotants ou mobiles verticalement, de sorte que les positions desdites butées d'inclinaison physiques (5) sont réglables.

2. Système selon la revendication précédente, dans lequel les noeuds de commande d'inclinaison (4) sont disposés à l'intersection d'une pluralité de barres structurales (6), de profilés reliés par le biais de soudure ou d'éléments de liaison filetés ou reliés par rivets.

3. Système selon l'une quelconque des revendications précédentes, dans lequel les noeuds de commande d'inclinaison (4) sont disposés à des distances régulières dans la structure d'inclinaison tridimensionnelle (1).

4. Système selon l'une quelconque des revendications précédentes, dans lequel la structure d'inclinaison tridimensionnelle (1) est constituée d'une pluralité de sous-structures pour recouvrir toute la surface à incliner.

5. Système selon l'une quelconque des revendications précédentes, dans lequel les noeuds de commande d'inclinaison (4) comprennent une plaque de support (7) où sont installées les butées d'inclinaison physiques (5).

6. Système selon l'une quelconque des revendications précédentes, dans lequel les plaques de support (7) comprennent des points d'ancrage (9) pour les noeuds de commande d'inclinaison (4).

7. Système selon l'une quelconque des revendications 5-6, dans lequel les plaques de support (7) comprennent des sièges (10) pour des éléments structuraux de la structure d'inclinaison tridimensionnelle (1), tels que des barres structurales (6), des nervures et/ou des renforts géométriques (11) pour rigidifier lesdites plaques de support (7).

8. Système selon l'une quelconque des revendications 5 à 7, dans lequel les butées d'inclinaison physiques (5) sont fixées à la plaque de support (7) au moyen d'ensembles de rondelles (14) et/ou écrous (15) situés sur les deux surfaces d'une douille (16) servant de logement (8) dans la plaque de support (7).

9. Système selon l'une quelconque des revendications 5-8, dans lequel la fixation des butées d'inclinaison physiques (5) à la plaque de support (7) comprend un ressort précontraint (17), la hauteur d'inclinaison étant réglable au moyen d'un écrou (29), de préférence à filetage fin, séparé de la plaque de support (7) par une rondelle (28) et/ou bloqué au moyen d'une vis de pression, d'une fermeture à écrou chimique ou d'un système de verrouillage.

10. Système selon l'une quelconque des revendications précédentes, dans lequel les butées d'inclinaison physiques (5) comportent des moyens de commande de contact auxiliaires (31) pour signaler le contact correct entre les facettes (3) et les butées d'inclinaison physiques (5), lesdits moyens auxiliaires comprenant un contact inductif ou un capteur de pression ou une cellule de charge.

11. Système selon l'une quelconque des revendications précédentes, dans lequel les butées d'inclinaison physiques (5) comprennent, dans leur partie supérieure, une coiffe supérieure (23) et/ou, dans leur partie inférieure, une coiffe inférieure (20) avec une ou plusieurs surfaces (24) adaptées à la mesure par des moyens de vérification optiques externes.

12. Système selon l'une quelconque des revendications précédentes, dans lequel les butées d'inclinaison physiques (5) comprennent, dans la coiffe supérieure (25) ou sur la surface de contact (26) avec la surface à incliner, des récepteurs (27) appropriés pour la mesure par des moyens de vérification optiques.

13. Système selon l'une quelconque des revendications précédentes, dans lequel la surface à incliner comprend une ou plusieurs facettes d'héliostat (3), et dans lequel l'agencement des noeuds de commande d'inclinaison (4) coïncide avec les positions des systèmes d'ancrage pour lesdites facettes (3) à incliner.

14. Procédé d'inclinaison de surfaces pour incliner une surface formée par une pluralité d'éléments de surface, qui comprend l'utilisation du système selon l'une quelconque des revendications précédentes, et dans lequel sont effectuées les étapes suivantes:
- configurer la position de la butée d'inclinaison physique (5) en fonction de la forme de la surface finale à obtenir;
- vérifier le bon positionnement des butées d'inclinaison physiques (5) au moyen de systèmes de mesure optiques utilisant une mesure directe ;
- positionner la surface réfléchissante à incliner sous la structure d'inclinaison tridimensionnelle (1) sans contact avec les butées d'inclinaison physiques (5) et à une distance sélectionnée de ladite structure d'inclinaison tridimensionnelle (1) ;
- déplacer les éléments de surface jusqu'à la mise en contact avec toutes les butées d'inclinaison physiques (5) qui leur correspondent, en les fixant dans ladite position, en obtenant l'orientation finale désirée de la surface ;
- vérifier l'orientation de chaque élément de surface à incliner au moyen d'une vérification manuelle ou automatique, en déterminant s'il est en contact avec les butées d'inclinaison physiques (5), soit au moyen de l'utilisation de systèmes de mesure optiques, soit par mesure directe ou observation ;
- enlever la surface inclinée du système.
